(19) Europäisches Patentamt
European Patent Office
Office européen des brevets

(11) Veröffentlichungsnummer: **0 307 357 B1**

(12) **EUROPÄISCHE PATENTSCHRIFT**

(45) Veröffentlichungstag der Patentschrift: **22.06.94**

(51) Int. Cl.$^5$: **C09B 41/00**

(21) Anmeldenummer: **88810598.8**

(22) Anmeldetag: **30.08.88**

# (54) Verfahren zur Herstellung von metallisierbaren Azofarbstoffen.

(30) Priorität: **08.09.87 CH 3447/87**

(43) Veröffentlichungstag der Anmeldung:
**15.03.89 Patentblatt 89/11**

(45) Bekanntmachung des Hinweises auf die Patenterteilung:
**22.06.94 Patentblatt 94/25**

(84) Benannte Vertragsstaaten:
**BE CH DE ES FR GB IT LI**

(56) Entgegenhaltungen:
**US-A- 2 812 321**

**CHEMICAL ABSTRACTS, Band 106, Nr. 22, Juni 1987, Seite 88, Zusammenfassung Nr.178104g, Columbus, Ohio, US; & JP-A-61 254 550 (MITSUI TOATSU CHEMICALS, INC.) 12-11-1986**

(73) Patentinhaber: **CIBA-GEIGY AG**
**Klybeckstrasse 141**
**CH-4002 Basel(CH)**

(72) Erfinder: **Langfeld, Horst, Dr.**
**Im Proli 30**
**D-7889 Grenzach-Wyhlen 1(DE)**
Erfinder: **Puebla, Claudio, Dr.**
**Talstrasse 26**
**D-7889 Grenzach-Wyhlen 1(DE)**
Erfinder: **Sereinig, Günter**
**Am Schlierbach 2**
**D-7860 Schopfheim(DE)**

**EP 0 307 357 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Kupplung von 1-Diazo-2-hydroxynaphthalin-4-sulfonsäure bzw. von der entsprechenden eine Nitrogruppe enthaltende Komponente auf eine Kupplungskomponente der Benzol-, Naphthalin- oder heterocyclischen Reihe, die eine Hydroxygruppe in Nachbarstellung zu der Kupplungsstelle enthält, verläuft in einigen Fällen langsam und mit unbefriedigenden Ausbeuten.

In den letzten Jahren ist man zunehmend bestrebt, Herstellungsverfahren für Farbstoffe und deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch folgende Kriterien auszeichnen: möglichst quantitative Ausbeute, reproduzierbar gute Qualität, Umsetzungen mit möglichst wenig Aufarbeitungsschritten sowie schnelle Umsetzungen, die eine hohe Zahl von Umsetzungen pro Zeiteinheit ermöglichen.

Das erfindungsgemässe Verfahren zur Herstellung von Azofarbstoffen der Formel

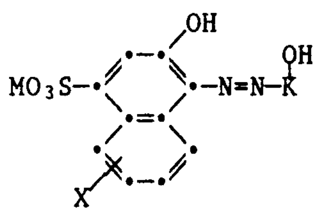

(1),

worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkali- oder Ammoniumion bedeutet, ist dadurch gekennzeichnet, dass man eine Diazokomponente der Formel

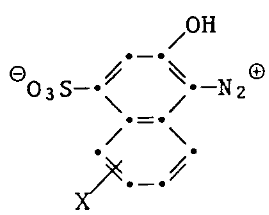

(2)

in Gegenwart von Alkali- und Ammoniumchlorid auf eine Kupplungskomponente der Formel

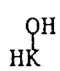

(3)

kuppelt, wobei K und X in den Formeln (2) und (3) die unter Formel (1) angegebenen Bedeutungen haben.

Die Kupplung von Verbindungen der Formel (2) auf Verbindungen der Formel (3) ist als schwierig bekannt. So wurde versucht mit Hilfe verschiedener Katalysatoren, wie z.B. in Gegenwart von Zinksalzen oder in Gegenwart von Calzium- oder Magnesiumsalzen, oder durch Kupplung unter Stickstoffatmosphäre die Ausbeute zu verbessern. Zinksalze verbessern die Ausbeute ebenso wie Calcium- und Magnesiumsalze; nachteilig ist der störende Salzgehalt nach beendeter Reaktion, wodurch eine Zwischenabscheidung des gebildeten Azofarbstoffes im allgemeinen notwendig ist. Das Arbeiten unter Stickstoffatmosphäre erfordert spezielle Apparaturen.

Aus der US-A-2 812 321 ist ein Verfahren bekannt, worin die Kupplung in Gegenwart von Zinksalzen erfolgt. Aus Chemical Abstracts 106, Nr. 22, Zusammenfassung Nr. 178104g ist ein Verfahren bekannt, worin die Kupplung unter Stickstoffatmosphäre erfolgt.

Es ist überraschend, dass das erfindungsgemässe Verfahren eine deutliche Steigerung der Ausbeute bei der Kupplung in Gegenwart einer Mischung von Alkali- und Ammoniumchlorid ergibt, dass die erhaltenen Azofarbstoffe ohne Zwischenabscheidung direkt weiterverarbeitet werden können, und dass die

Umsetzung bereits nach sehr kurzer Zeit nahezu vollständig beendet ist. Als ein wichtiges Merkmal des erfindungsgemässen Verfahrens ist die sehr kurze Reaktionszeit hervorzuheben. Bereits nach wenigen Minuten, in der Regel nach 5 bis 10 Minuten ist die Umsetzung beendet, wodurch ein grosser Umsatz pro Zeiteinheit gewährleistet ist. Ferner ergibt sich aus der erfindungsgemässen Verfahrensweise keine Belastung des Abwassers durch Schwermetallsalze oder schwerlösliche Salze.

Als Alkalichlorid verwendet man in dem erfindungsgemässen Verfahren zweckmässigerweise Lithium-, Natrium- oder Kaliumchlorid. Gemäss einer bevorzugten Ausführungsform des erfindungsgemässen Verfahrens verwendet man Natriumchlorid als Alkalichlorid.

Die Menge, in der das Alkali- und Ammoniumchlorid in dem erfindungsgemässen Verfahren verwendet werden kann, kann in weiten Grenzen schwanken, im allgemeinen hat sich die 5- bis 15-fache molare Menge Alkali- und Ammoniumchlorid, insbesondere Natrium- und Ammoniumchlorid, bezogen auf die molare Menge der Diazokomponente der Formel (2) als vorteilhaft erwiesen.

Eine bevorzugte Ausführungsform des erfindungsgemässen Verfahrens ist dadurch gekennzeichnet, dass man die 8- bis 10-fache molare Menge Alkali- und Ammoniumchlorid verwendet.

Das Verhältnis von Alkalichlorid zu Ammoniumchlorid kann in weiten Grenzen schwanken, im allgemeinen hat sich das molare Verhältnis von 5:1 bis 15:1, d.h. 5 Mol Alkalichlorid zu 1 Mol Ammoniumchlorid bis 15 Mol Alkalichlorid zu 1 Mol Ammoniumchlorid, als vorteilhaft erwiesen. Eine bevorzugte Ausführungsform des erfindungsgemässen Verfahrens ist dadurch gekennzeichnet, dass das molare Verhältnis von Alkalichlorid zu Ammoniumchlorid 8:1 bis 10:1 ist.

Die Kupplung der Verbindung der Formel (2) mit der Verbindung der Formel (3) wird in wässriger Lösung ausgeführt. Als pH hat sich für die Kupplung ein Wert zwischen 8,5 und 11,5 als vorteilhaft erwiesen. Die sauer vorliegende Diazokomponente der Formel (2) wird zweckmässigerweise vor der Kupplung mit Alkalihydroxid zunächst auf einen pH-Wert von ca. 7 gestellt und erst unmittelbar vor der Kupplung auf den Kupplungs-pH-Wert zwischen 8,5 und 11,5, insbesondere zwischen 9 und 10, eingestellt, diese Einstellung erfolgt zweckmässigerweise mit Ammoniak oder wässriger Ammoniaklösung, z.B. einer 10- bis 30 %-igen wässrigen Lösung; vorzugsweise enthält die Lösung 22 bis 28 Gewichtsprozent Ammoniak.

Eine besonders bevorzugte Ausführungsform des erfindungsgemässen Verfahrens ist dadurch gekennzeichnet, dass man die Verbindung der Formel (2) mit Alkali- und Ammoniumchlorid, insbesondere der 5- bis 15-fach molaren Menge, vorzugsweise der 8- bis 10-fach molaren Menge, mit einem molaren Verhältnis Alkalichlorid zu Ammoniumchlorid von 5:1 bis 15:1, insbesondere 8:1 bis 10:1, versetzt, die Lösung neutralisiert und unmittelbar vor der Kupplung den pH auf einen Wert zwischen 8,5 und 11,5, insbesondere zwischen 9 und 10, mit Ammoniak oder einer wässrigen Ammoniak-Lösung einstellt, und dann so schnell wie möglich bei einer Anfangstemperatur von mindestens 40 °C in die mittels Alkali auf einen pH-Wert zwischen 9 und 13 eingestellte Lösung der Kupplungskomponente der Formel (3) einfliessen lässt.

Das molare Verhältnis der Diazokomponente der Formel (2) zu der Kupplungskomponente der Formel (3) ist 0,8:1,2 bis 1,2:0,8, insbesondere 0,95:1,05 bis 1,05:0,95.

Eine weitere bevorzugte Ausführungsform des erfindungsgemässen Verfahrens ist dadurch gekennzeichnet, dass man bei einer Temperatur von mindestens 40 °C, insbesondere zwischen 40 und 75 °C, kuppelt. Insbesondere erfolgt die Kupplung adiabatisch, wobei eine Anfangstemperatur von mindestens 40 °C sich als besonders vorteilhaft erwiesen hat.

Eine besonders wichtige Ausführungsform des erfindungsgemässen Verfahrens ist dadurch gekennzeichnet, dass man in wässriger Lösung eine Diazokomponente der Formel (2) in Gegenwart der 5- bis 15-fach molaren Menge, bezogen auf die molare Menge der Diazokomponente, Alkali- und Ammoniumchlorid bei einem mittels Ammoniak eingestellten pH-Wert zwischen 8,5 und 11,5, insbesondere zwischen 9,0 und 10,5, auf eine Kupplungskomponente der Formel (3) kuppelt.

Nach erfolgter Kupplung kann der Azofarbstoff der Formel (1) ohne weitere Reinigung direkt weiterverarbeitet werden, z.B. durch Metallisierung zu einem Metallkomplexfarbstoff. Soll der Farbstoff der Formel (1) isoliert werden, hat es sich als günstig erwiesen die Kupplungsmasse kurz zu erwärmen, z.B. auf eine Temperatur von 60 bis 90 °C, wodurch eine gut filtrierbare Form des Kupplungsproduktes erhalten wird.

Die Diazokomponenten der Formel (2), die nach dem erfindungsgemässen Verfahren eingesetzt werden können, sind insbesondere 1-Diazo-2-hydroxynaphthalin-4-sulfonsäure und 1-Diazo-6-nitro-2-hydroxynaphthalin-4-sulfonsäure. Die Diazokomponenten der Formel (2) sind bekannt und werden nach bekannten Verfahren hergestellt.

Die Kupplungskomponenten der Formel (3) sind bekannt und werden nach bekannten Verfahren hergestellt. Vorzugsweise werden in dem erfindungsgemässen Verfahren Kupplungskomponeten eingesetzt, die der Benzol- oder der Naphthalinreihe, oder der 5-Pyrazolon, Hydroxychinolin- oder Acetoacetarylid- oder Benzoylessigsäure-Reihe angehören.

Die Kupplungskomponenten der Formel (3) können ausser durch die Hydroxygruppe noch durch folgende Substituenten substituiert sein: $C_1$-$C_6$-Alkyl, $C_1$-$C_6$-Alkoxy, $C_2$-$C_6$-Alkanoylamino, $C_1$-$C_6$-Alkoxycarbonyl-amino, Halogen, Sulfo, Sulfonamid und Sulfongruppen.

Als $C_2$-$C_6$-Alkanoylamino kommt z.B. Acetylamino, Propionylamino und Butyrylamino in Betracht.

Als $C_1$-$C_6$-Alkoxycarbonylamino kommt z.B. Methoxycarbonylamino und Aethoxycarbonylamino in Betracht.

Als $C_1$-$C_6$-Alkyl kommt z.B. Methyl, Aethyl, Propyl, Isopropyl, Butyl, sek.-Butyl, tert.-Butyl, Isobutyl, Pentyl und Hexyl in Betracht.

Als $C_1$-$C_6$-Alkoxy kommt z.B. Methoxy, Aethoxy, Propoxy, Isopropoxy und Butoxy in Betracht.

Als Halogen kommt z.B. Fluor, Brom und insbesondere Chlor in Betracht.

Als Sulfonamido kommt z.B. $-SO_2NH_2$, $SO_2NHC_1$-$C_6$-Alkyl, wie z.B. $-SO_2NHCH_3$ und $-SO_2NHC_2H_5$ und $-SO_2N(C_1$-$C_6$-Alkyl$)_2$ wie z.B. $-SO_2N(CH_3)_2$ und $-SO_2N(C_2H_5)_2$) sowie

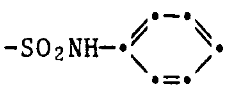

,

wobei der Phenylrest substituiert sein kann, z.B. durch Sulfo oder Carboxy, in Betracht.

Als Sulfongruppe kommt z.B. $-SO_2$-$C_1$-$C_6$-Alkyl wie $-SO_2$-$CH_3$ und $-SO_2$-Aryl wie Phenylsulfonyl in Betracht.

Gemäss einer besonders bevorzugten Ausführungsform des erfindungsgemässen Verfahrens verwendet man Kupplungskomponenten der Formel (3), worin K ein Benzol-, Naphthalin- oder 1-Phenyl-3-methylpyrazol-5-on-Rest ist, der ein bis drei der oben genannten Substituenten enthalten kann; insbesondere bedeutet K den Naphthylrest.

Eine ganz besonders bevorzugte Ausführungsform des erfindungsgemässen Verfahrens ist dadurch gekennzeichnet, dass man als Kupplungskomponente der Formel (3) 1-Naphthol, 2-Naphthol, 5,8-Dichlor-1-naphthol, 1-Naphthol-5-sulfonsäure, 8-Acetylamino-2-naphthol, 6-Acetylamino-2-naphthol-4-sulfonsäure, 1-Phenyl-3-methylpyrazol-5-on, 6-Amino-1-naphthol-3-sufonsäure oder 4-tert.-Butylphenol verwendet.

Besonders geeignete Kupplungskomponenten sind Phenole, die mit $C_1$-$C_6$-Alkyl und/oder $C_1$-$C_6$-Alkanoylamino, $C_1$-$C_6$-Alkoxycarbonylamino substituiert sind und vor allem Naphthole, die gegebenenfalls mit Chlor, $C_2$-$C_6$-Alkanoylamino-, $C_1$-$C_6$-Alkoxycarbonylamino-, Sulfo, Sulfonamid- oder Sulfongruppen substituiert sind, wie z.B. 4-Methylphenol, 4-t-Butyl-phenol, 2,4-Dimethylphenol, 2-Acetylamino-4-methylphenol, 1- oder 2-Naphthol, 1-Naphthol-3-, -4-oder -5-sulfosäure, 2-Naphthol-3-, -4-, -5-, -6-, -7- oder -8-sulfosäure, 2-Naphthol-6-sulfamid, 1-Acetylamino-7-naphthol, 1-Acetylamino-6-naphthol, 1-Propionylamino-7-naphthol, 1-Carbomethoxyamino-7-naphthol, 5,8-Dichlor-1-naphthol, 2-Acetylamino-6-naphthol-8-sulfonsäure, 1-Phenyl-3-methylpyrazol-5-on, 6-Amino-1-naphthol-3-sulfonsäure.

Eine besonders interessante Ausführungsform des erfindungsgemässen Verfahrens ist dadurch gekennzeichnet, dass man 1-Diazo-6-nitro-2-hydroxynaphthalin-4-sulfonsäure in wässriger Lösung, mit der 8-bis 10-fach molaren Menge Natrium- und Ammoniumchlorid, wobei das molare Verhältnis von Natrium- zu Ammoniumchlorid 8:1 bis 10:1 ist, versetzt, die Lösung mit NaOH neutralisiert und unmittelbar vor der Kupplung den pH mit wässriger Ammoniaklösung auf einen Wert zwischen 9 und 10 einstellt, und dann so schnell wie möglich bei einer Anfangstemperatur von 40 °C diese Lösung in eine mit Alkali auf einen pH-Wert zwischen 11 und 13 eingestellte Lösung von $\beta$-Naphthol einfliessen lässt. Die Kupplung erfolgt adiabatisch und ist nach 5 bis 10 Minuten beendet. Der Azofarbstoff kann direkt ohne Isolierung weiterverarbeitet werden oder kann nach kurzem Erhitzen auf 70 bis 80 °C durch Filtration isoliert werden.

Die nach dem erfindungsgemässen Verfahren erhaltenen Azofarbstoffe eignen sich zur Herstellung von Metallkomplexfarbstoffen, wie z.B. Chrom- oder Kobaltkomplexazofarbstoffen, wobei die Metallisierung nach an sich bekannten Methoden erfolgt.

In dem folgenden Beispiel stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: In 150 Teile Wasser werden 3 Teile Ammoniumchlorid und 14,75 Teile 1-Diazo-6-nitro-2-hydroxynaphthalin-4-sulfonsäure eingetragen. Anschliessend gibt man 20 Teile Natriumchlorid hinzu und stellt den pH-Wert mit Hilfe einer wässrigen NaOH-Lösung (50 %-ig) auf den Neutralpunkt ein. Die Temperatur steigt dabei auf ca. 42° an. Dann versetzt man mit 6 Teilen einer wässrigen Ammoniak-Lösung (25 %-ig) und anschliessend sofort mit einer Lösung, die wie folgt hergestellt wurde: In 50 Teile 60° warmes Wasser werden 7,5 Teile 2-Naphthol eingetragen und mit Hilfe von 2,5 Teilen NaOH gelöst, wobei

sich ein pH-Wert von ca. 12 einstellt, und dann versetzt man mit 7,5 Teilen Natriumchlorid. Das Reaktionsgemisch wird sofort gut durchgerührt, wobei sich eine Temperatur von ca. 50° einstellt und der pH auf ein Wert zwischen 9,3 und 9,5 fällt. Nach 5 bis 10 Minuten ist die Kupplung beendet. Das Kupplungsprodukt wird mit Salzsäure (32 %-ig) auf den pH-Wert 7 gestellt und bei 80° filtriert. Die Ausbeute beträgt ca. 92 % der Theorie.

Wenn man anstelle von 1-Diazo-6-nitro-2-hydroxynaphthalin-4-sulfonsäure eine äquimolare Menge 1-Diazo-2-hydroxynaphthalin-4-sulfonsäure verwendet, erhält man einen Farbstoff mit ähnlich hoher Ausbeute in vergleichbar kurzer Verweilzeit im Kupplungskessel.

Die erhaltenen Farbstoffe können ohne Zwischenabscheidung oder ohne Reinigung direkt zum Metallkomplex weiterverarbeitet werden, d.h. die pH-Einstellung auf den Neutralpunkt, Erwärmen auf 80° und die Filtration entfallen.

Beispiel 2: In 150 Teile Wasser werden 2,5 Teile Ammoniumchlorid und 14,75 Teile 1-Diazo-6-nitro-2-hydroxynaphthalin-4-sulfonsäure eingetragen. Anschliessend gibt man 24 Teile Natriumchlorid hinzu und stellt den pH-Wert mit Hilfe einer wässrigen NaOH-Lösung (50 %-ig) auf den Neutralpunkt ein. Die Temperatur steigt dabei auf ca. 42° an. Dann versetzt man mit 6 Teilen einer wässrigen Ammoniak-Lösung (25 %-ig) und anschliessend sofort mit einer Lösung, die wie folgt hergestellt wurde: In 50 Teile 60° warmes Wasser werden 7,5 Teile 2-Naphthol eingetragen und mit Hilfe von 2,5 Teilen NaOH gelöst, wobei sich ein pH-Wert von ca. 12 einstellt, und dann versetzt man mit 10 Teilen Natriumchlorid. Das Reaktionsgemisch wird sofort gut durchgerührt, eine Temperatur von ca. 65° eingestellt und der pH auf einen Wert zwischen 8,6 und 9,0 eingestellt. Nach 5 bis 10 Minuten ist die Kupplung beendet. Das Kupplungsprodukt wird mit Salzsäure (32 %-ig) auf den pH-Wert 7 gestellt und bei 80° filtriert. Die Ausbeute beträgt ca. 92 % der Theorie.

Beispiel 3: In 150 Teile Wasser werden 2,65 Teile Ammoniumchlorid und 14,75 Teile 1-Diazo-6-nitro-2-hydroxynaphthalin-4-sulfonsäure eingetragen. Anschliessend gibt man 14 Teile Natriumchlorid hinzu und stellt den pH-Wert mit Hilfe einer wässrigen NaOH-Lösung (50 %-ig) auf den Neutralpunkt ein. Die Temperatur steigt dabei auf ca. 42° an. Dann versetzt man mit 6 Teilen einer wässrigen Ammoniak-Lösung (25 %-ig) und anschliessend sofort mit einer Lösung, die wie folgt hergestellt wurde: In 50 Teile 60° warmes Wasser werden 7,5 Teile 2-Naphthol eingetragen und mit Hilfe von 2,5 Teilen NaOH gelöst, wobei sich ein pH-Wert von ca. 12 einstellt, und dann versetzt man mit 1,95 Teilen Natriumchlorid. Das Reaktionsgemisch wird sofort gut durchgerührt, eine Temperatur von ca. 42° eingestellt und der pH auf ein Wert zwischen 10,3 und 10,6 eingestellt. Nach 5 bis 10 Minuten ist die Kupplung beendet. Das Kupplungsprodukt wird mit Salzsäure (32 %-ig) auf den pH-Wert 7 gestellt und bei 80° filtriert. Die Ausbeute beträgt ca. 92 % der Theorie.

Beispiel 4: In 150 Teile Wasser werden 1,8 Teile Ammoniumchlorid und 14,75 Teile 1-Diazo-6-nitro-2-hydroxynaphthalin-4-sulfonsäure eingetragen. Anschliessend gibt man 20 Teile Natriumchlorid hinzu und stellt den pH-Wert mit Hilfe einer wässrigen NaOH-Lösung (50 %-ig) auf den Neutralpunkt ein. Die Temperatur steigt dabei auf ca. 42° an. Dann versetzt man mit 6 Teilen einer wässrigen Ammoniak-Lösung (25 %-ig) und anschliessend sofort mit einer Lösung, die wie folgt hergestellt wurde: In 50 Teile 60° warmes Wasser werden 7,5 Teile 2-Naphthol eingetragen und mit Hilfe von 2,5 Teilen NaOH gelöst, wobei sich ein pH-Wert von ca. 12 einstellt, und dann versetzt man mit 7,5 Teilen Natriumchlorid. Das Reaktionsgemisch wird sofort gut durchgerührt, eine Temperatur von ca. 55° eingestellt und der pH auf ein Wert zwischen 9,1 und 9,3 eingestellt. Nach 5 bis 10 Minuten ist die Kupplung beendet. Das Kupplungsprodukt wird mit Salzsäure (32 %-ig) auf den pH-Wert 7 gestellt und bei 80° filtriert. Die Ausbeute beträgt ca. 92 % der Theorie.

Wenn man wie in den Beispielen 1 bis 4 angegeben verfährt, jedoch als Diazokomponente eine äquimolare Menge der in der folgenden Tabelle in Spalte 2 angegebenen Diazokomponenten und anstelle der Kupplungskomponente eine äquimolare Menge der in der folgenden Tabelle in Spalte 3 angegebenen Kupplungskomponenten verwendet, so erhält man bei sonst gleicher Verfahrensweise Monoazofarbstoffe in hohen Ausbeuten, die ohne Zwischenabscheidung oder ohne Reinigung direkt zum Metallkomplex weiterverarbeitet werden können.

Tabelle

| Beispiel | Diazokomponente | Kupplungskomponente |
|---|---|---|
| 5 | 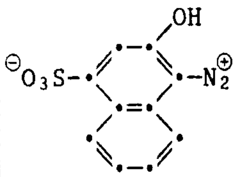 | 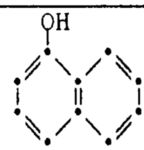 |
| 6 | 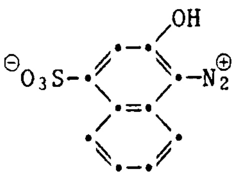 | 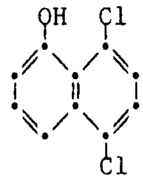 |
| 7 | 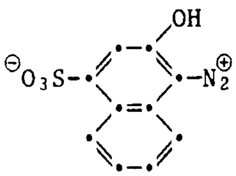 | 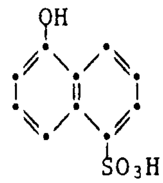 |
| 8 | 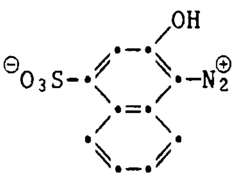 | 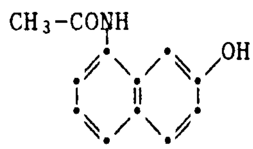 |
| 9 | 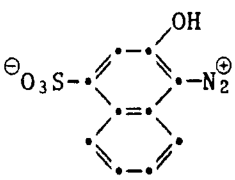 | 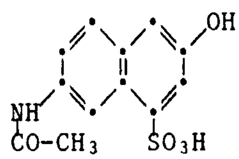 |
| 10 | 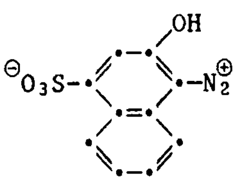 | 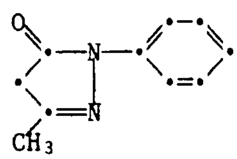 |
| 11 | 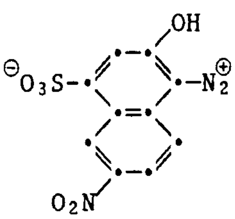 | 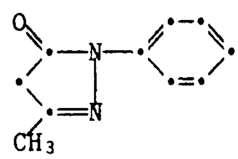 |

Tabelle

| Beispiel | Diazokomponente | Kupplungskomponente |
|---|---|---|
| 12 | 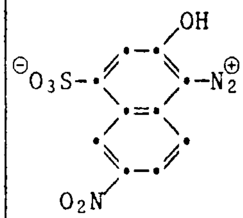 | 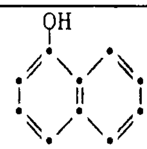 |
| 13 | 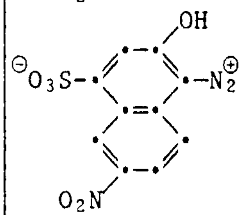 | 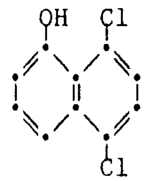 |
| 14 | 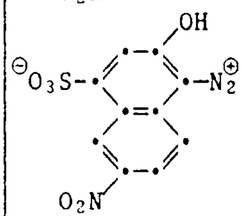 | 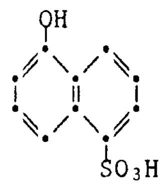 |
| 15 | 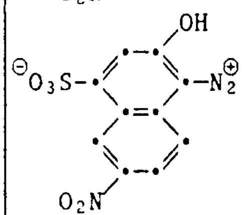 | 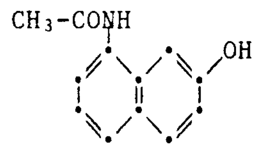 |
| 16 | 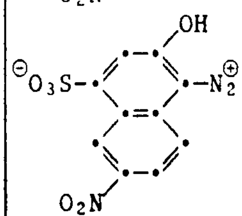 | 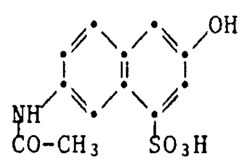 |
| 17 | 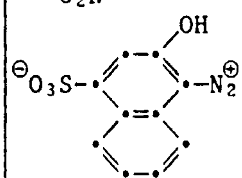 | 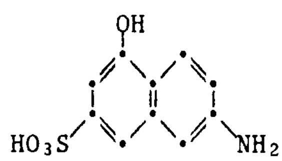 |
| 18 | 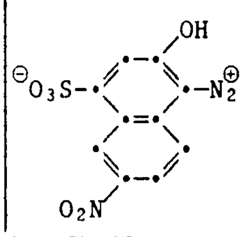 | 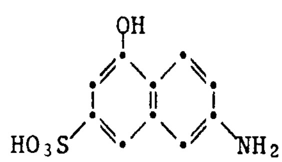 |

Tabelle

| Beispiel | Diazokomponente | Kupplungskomponente |
|---|---|---|
| 19 | 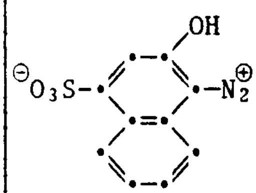 | 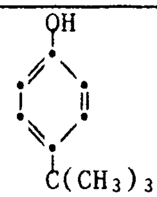 |
| 20 | 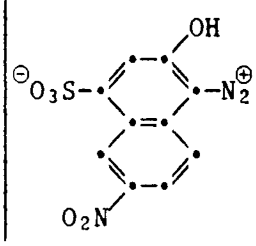 | 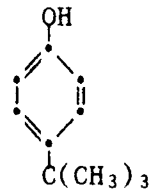 |

Die erhaltenen Farbstoffe können ohne Zwischenabscheidung oder ohne Reinigung direkt zum Metallkomplex weiterverarbeitet werden, d.h. die pH-Einstellung auf den Neutralpunkt, Erwärmen auf 80° und die Filtration entfallen.

## Patentansprüche

**1.** Verfahren zur Herstellung von Azofarbstoffen der Formel

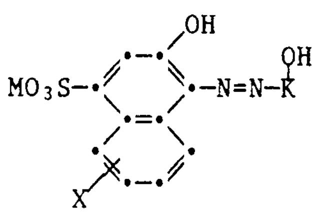

(1),

worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkali- oder Ammoniumion bedeutet, dadurch gekennzeichnet, dass man eine Diazokomponente der Formel

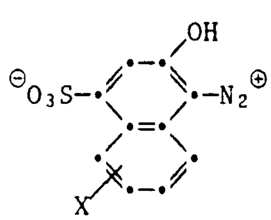

(2)

in Gegenwart von Alkali- und Ammoniumchlorid auf eine Kupplungskomponente der Formel

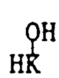

(3)

kuppelt, wobei K und X in den Formeln (2) und (3) die unter Formel (1) angegebenen Bedeutungen haben.

**2.** Verfahren gemäss Anspruch 1, dadurch gekennzeichnet, dass man in Gegenwart von Natrium- und Ammoniumchlorid kuppelt.

**3.** Verfahren gemäss einem der Ansprüche 1 und 2, dadurch gekennzeichnet, dass man bezogen auf die molare Menge der Diazokomponente der Formel (2) in Gegenwart der 5- bis 15-fach molaren Menge, insbesondere der 8- bis 10-fach molaren Menge, Alkali- und Ammoniumchlorid kuppelt.

**4.** Verfahren gemäss einem der Ansprüche 1 bis 3, dadurch gekennzeichnet, dass das molare Verhältnis Alkalichlorid zu Ammoniumchlorid 5:1 bis 15:1 insbesondere 8:1 bis 10:1, ist.

**5.** Verfahren gemäss einem der Ansprüche 1 bis 4, dadurch gekennzeichnet, dass man unmittelbar vor der Kupplung der Lösung/Suspension enthaltend die Diazokomponente und Alkali- und Ammoniumchlorid den pH auf einen Wert zwischen 8,5 und 11,5 einstellt.

**6.** Verfahren gemäss Anspruch 5, dadurch gekennzeichnet, dass man den pH-Wert mit wässriger Ammoniak-Lösung einstellt.

**7.** Verfahren gemäss einem der Ansprüche 1 bis 6, dadurch gekennzeichnet, dass man adiabatisch kuppelt.

**8.** Verfahren gemäss einem der Ansprüche 1 bis 7, dadurch gekennzeichnet, dass man bei einer Temperatur von mindestens 40 °C, insbesondere zwischen 40 und 75 °C, kuppelt.

**9.** Verfahren gemäss Anspruch 1, dadurch gekennzeichnet, dass man in wässriger Lösung eine Diazokomponente der Formel (2) in Gegenwart der 5- bis 15-fach molaren Menge, bezogen auf die molare Menge der Diazokomponente, Alkali- und Ammoniumchlorid bei einem mittels Ammoniak eingestellten pH-Wert zwischen 8,5 und 11,5, insbesondere zwischen 9,0 und 10,5, auf eine Kupplungskomponente der Formel (3) kuppelt.

**10.** Verfahren gemäss einem der Ansprüche 1 bis 9, dadurch gekennzeichnet, dass man eine Kupplungskomponente der Formel (3) verwendet, worin K der Rest einer Kupplungskomponente der Benzol- oder Naphthalinreihe oder der 5-Pyrazolon, Hydroxychinolin-, Acetoacetarylid- oder Benzoylessigsäure-Reihe ist.

**11.** Verfahren gemäss Anspruch 10, dadurch gekennzeichnet, dass K ein Benzol-, Naphthalin- oder 5-Pyrazolonrest ist, der substituiert sein kann durch $C_1$-$C_6$-Alkyl, $C_1$-$C_6$-Alkoxy, $C_2$-$C_6$-Alkanoylamino, $C_1$-$C_6$-Alkoxycarbonylamino, Halogen, Sulfo und Sulfonamid- und Sulfongruppen.

**12.** Verfahren gemäss Anspruch 10, dadurch gekennzeichnet, dass man als Kupplungskomponente der Formel (3) 1-Naphthol, 2-Naphthol, 5,8-Dichlor-1-naphthol, 1-Naphthol-5-sulfonsäure, 8-Acetylamino-2-naphthol, 6-Acetylamino-2-naphthol-4-sulfonsäure, 1-Phenyl-3-methylpyrazol-5-on, 6-Amino-1-naphthol-3-sulfonsäure oder 4-tert.-Butylphenol verwendet.

**13.** Verfahren gemäss einem der Ansprüche 1 bis 12, dadurch gekennzeichnet, dass man eine Kupplungskomponente der Formel (3) verwendet, worin K der Naphthylrest ist.

## Claims

**1.** A process for the preparation of azo dyes of the formula

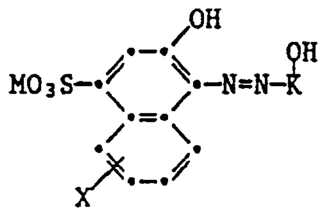

(1),

in which K is the radical of a coupling component of the benzene or naphthalene series or of the heterocyclic series in which the hydroxyl group is attached to K in a position adjacent to the azo group, X is hydrogen or nitro and M is an alkali metal ion or ammonium ion, which comprises coupling a diazo component of the formula

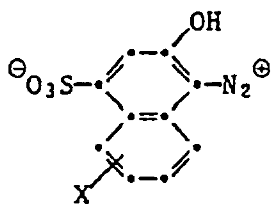

(2)

in the presence of an alkali metal chloride and ammonium chloride with a coupling component of the formula

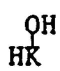

(3)

K and X in the formulae (2) and (3) being as defined under formula (1).

**2.** A process according to claim 1, wherein coupling is carried out in the presence of sodium chloride and ammonium chloride.

**3.** A process according to any one of claims 1 and 2, wherein coupling is carried out in the presence of a 5-molar to 15-molar amount, in particular an 8-molar to 10-molar amount, of an alkali metal chloride and ammonium chloride, relative to the molar amount of the diazo component of the formula (2).

**4.** A process according to any one of claims 1 to 3, wherein the molar ratio of alkali metal chloride to ammonium chloride is 5:1 to 15:1, in particular 8:1 to 10:1.

**5.** A process according to any one of claims 1 to 4, wherein the pH is adjusted to a value between 8.5 and 11.5 immediately before the coupling of the solution/suspension containing the diazo component and an alkali metal chloride and ammonium chloride.

**6.** A process according to claim 5, wherein the pH is adjusted with aqueous ammonia solution.

**7.** A process according to any one of claims 1 to 6, wherein coupling is carried out adiabatically.

**8.** A process according to any one of claims 1 to 7, wherein coupling is carried out at a temperature of at least 40 °C, in particular between 40 and 75 °C.

**9.** A process according to claim 1, wherein a diazo component of the formula (2) is coupled, in aqueous solution and in the presence of a 5-molar to 15-molar amount, relative to the molar amount of the diazo component, of an alkali metal chloride and ammonium chloride, at a pH adjusted by means of ammonia to a value between 8.5 and 11.5, in particular between 9.0 and 10.5, with a coupling component of the formula (3).

**10.** A process according to any one of claims 1 to 9, wherein a coupling component of the formula (3) in which K is the radical of a coupling component of the benzene or naphthalene series or of the 5-pyrazolone, hydroxyquinoline, acetoacetarylide or benzoylacetic acid series is used.

**11.** A process according to claim 10, wherein K is a benzene, naphthalene or 5-pyrazolone radical which can be substituted by $C_1$-$C_6$alkyl, $C_1$-$C_6$alkoxy, $C_2$-$C_6$alkanoylamino, $C_1$-$C_6$alkoxycarbonylamino, halogen, sulfo and sulfonamide and sulfone groups.

**12.** A process according to claim 10, wherein the coupling component of the formula (3) used is 1-naphthol, 2-naphthol, 5,8-dichloro-1-naphthol, 1-naphthol-5-sulfonic acid, 8-acetylamino-2-naphthol, 6-acetylamino-2-naphthol-4-sulfonic acid, 1-phenyl-3-methylpyrazol-5-one, 6-amino-1-naphthol-3-sulfonic acid or 4-tert-butylphenol.

**13.** A process according to any one one of claims 1 to 12, wherein a coupling component of the formula (3) wherein K is the naphthyl radical is used.

**Revendications**

**1.** Procédé de préparation de colorants azoïques de formule

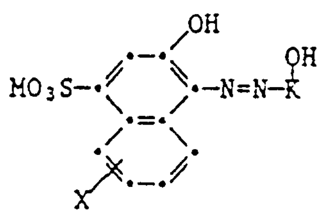

(1)

dans laquelle K représente un copulant de la série benzénique ou naphtalénique ou de la série hétérocyclique, le groupe hydroxyle étant lié à K en position vicinale du groupe azo, X représente un atome d'hydrogène ou un groupe nitro et M un ion alcalin ou d'ammonium, caractérisé en ce que l'on copule un composant diazo de formule

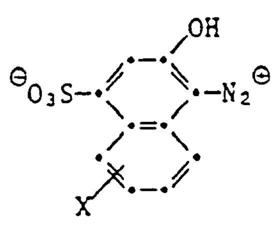

(2)

en présence de chlorure alcalin et de chlorure d'ammonium, avec un copulant de formule

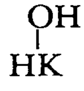

(3),

K et X ayant la même signification dans les formules (2) et (3) que celle indiquée pour la formule (1).

2. Procédé conforme à la revendication 1, caractérisé en ce que l'on réalise la copulation en présence de chlorure de sodium et de chlorure d'ammonium.

3. Procédé conforme à une des revendications 1 à 2, caractérisé en ce que l'on réalise la copulation en présence de chlorure alcalin et de chlorure de sodium en une quantité telle que le rapport molaire au composant diazo de formule (2) soit compris entre 5 et 15, en particulier entre 8 et 10.

4. Procédé conforme à une des revendications 1 à 3, caractérisé en ce que le rapport molaire du chlorure alcalin au chlorure d'ammonium est compris entre 5:1 et 15:1, en particulier entre 8:1 et 10:1.

5. Procédé conforme à une des revendications 1 à 4, caractérisé en ce que l'on ajuste, immédiatement avant la copulation, le pH de la solution/suspension contenant le composant diazo, le chlorure alcalin et le chlorure d'ammonium, à une valeur comprise entre 8,5 et 11,5.

6. Procédé conforme à la revendication 5, caractérisé en ce que l'on ajuste le pH avec une solution aqueuse d'ammoniaque.

7. Procédé conforme à une des révendications 1 à 6, caractérisé en ce que la copulation est réalisée dans des conditions adiabatiques.

8. Procédé conforme à une des revendications 1 à 7, caractérisé en ce que l'on réalise la copulation à une température supérieure ou égale à 40 °C, en particulier entre 40 et 75 °C.

9. Procédé conforme à la revendication 1, caractérisé en ce que l'on copule, en solution aqueuse, un composant diazo de formule (2) en présence d'une quantité 5 à 15 fois molaire de chlorure alcalin et de chlorure d'ammonium, par rapport à la quantité du composant diazo, à un pH ajusté avec de l'ammoniaque à une valeur comprise entre 8,5 et 11,5, en particulier entre 9,0 et 10,5, avec un copulant de formule (3).

10. Procédé conforme à une des revendication 1 à 9, caractérisé en ce que l'on utilise un copulant de formule (3), dans laquelle K est le résidu d'un copulant de la série benzénique, naphtalénique ou de la série constituée par les composés comme la 5-pyrazolone, l'hydroxyquinoléine, l'acéto-acétarylide ou l'acide benzoylacétique.

11. Procédé conforme à la revendication 10, caractérisé en ce que K représente un résidu benzyle, naphtyle ou 5-pyrazolonyle, pouvant être substitués par un groupe alkyle en $C_1$-$C_6$, alkoxy en $C_1$-$C_6$, alcanoylamino en $C_2$-$C_6$, alkoxycarbonylamino en $C_1$-$C_6$, sulfo, sulfonamide et sulfonyle et un atome d'halogène.

12. Procédé conforme à la revendication 10, caractérisé en ce que l'on utilise comme copulant de formule (3), le 1-naphtol, le 2-naphtol, de 5,8-dichloro-1-naphtol, l'acide 1-naphtol-5-sulfonique, le 8-acétylamino-2-naphtol, l'acide 6-acétylamino-2-naphtol-4-sulfonique, la 1-phényl-3-méthylpyrazol-5-one, l'acide 6-amino-1-naphtol-3-sulfonique ou le 4-*ter*-butylphénol.

13. Procédé conforme à une des revendications 1 à 12, caractérisé en ce l'on utilise un copulant de formule (3) dans laquelle K représente un résidu naphtyle.